# FASCICULE DE BREVET EUROPEEN

(11) **EP 2 354 647 B1**
(45) Date de publication et mention de la délivrance du brevet: **26.02.2014**
(21) Numéro de dépôt: 11152564.8
(22) Date de dépôt: 28.01.2011
(51) Int. Cl.: F21V 14/02, F21V 14/04, F21V 14/06, F21V 14/08, F21V 17/00, F21S 8/12, B60Q 1/076

(54) **Dispositif de déplacement d'un élément d'un dispositif d'éclairage et/ou de signalisation d'un véhicule automobile et procédé de fonctionnement d'un tel dispositif**
Vorrichtung zum Verschieben eines Elements einer Beleuchtungs- und/oder Signalisierungsvorrichtung eines Kraftfahrzeugs, und Bedienungsverfahren einer solchen Vorrichtung
Device for moving an element of a lighting and/or signalling device of an automobile and operating method for such a device

(30) Priorité: 02.02.2010 FR 1050725
(43) Date de publication de la demande: 10.08.2011
(73) Titulaire: VALEO VISION, 93012 Bobigny (FR)
(72) Inventeur: Lara, Alberto, 23650, TORREDONJ (ES); Teba, Daniel, 23600, MARTOS (ES); Puente, Jean-Claude, 93190, LIVRY GARGAN (FR); Albou, Pierre, 75013, PARIS (FR)

(56) Documents cités:
- FR-A1- 2 313 233
- US-A- 5 904 416

## Description

La présente invention concerne un dispositif de déplacement d'un élément d'un dispositif d'éclairage et/ou de signalisation d'un véhicule automobile, en particulier un dispositif de déplacement permettant de corriger le positionnement de la coupure dans un faisceau lumineux généré par le dispositif d'éclairage et/ou de signalisation. L'invention concerne aussi un procédé d'alimentation d'un moyen de compensation utilisé dans un tel dispositif de déplacement. L'invention concerne encore un dispositif d'éclairage et/ou de signalisation comprenant un tel dispositif de déplacement. L'invention concerne enfin un véhicule automobile comprenant un tel dispositif d'éclairage et/ou de signalisation.

Il existe dans les dispositifs d'éclairage et/ou de signalisation des véhicules automobiles des problèmes thermiques. En particulier, dans les dispositifs d'éclairage, il existe un problème de stabilité du faisceau lumineux émis alors que ces dispositifs d'éclairage fonctionnent à des températures très variables. Il existe notamment une grande différence de température entre le moment où le dispositif d'éclairage vient d'être activé et où il est à température ambiante et le moment où il a atteint une température de fonctionnement stable. En effet, les différents éléments des dispositifs d'éclairage subissent des dilatations parfois importantes entre ces deux températures. Ces dilatations ont pour effet de déformer les éléments des dispositifs d'éclairage et de modifier les caractéristiques géométriques des faisceaux lumineux qu'ils émettent. En particulier, la coupure du dispositif d'éclairage peut être modifiée.

Par ailleurs, les contraintes réglementaires sur ces dispositifs d'éclairage sont très strictes, en particulier sur le positionnement de la coupure. En effet, lors d'un essai réglementaire d'un tel dispositif d'éclairage, la position de la coupure ne doit pas avoir varié de plus de 0,2 % entre deux instants de mesure définis par la norme.

Ainsi, il est habituel de prévoir dans un dispositif d'éclairage un certain nombre de pièces de renfort présentant des dimensions ou des matières telles qu'elles permettent d'éviter des déformations et donc d'éviter des modifications des caractéristiques du faisceau lumineux émis. Néanmoins, une telle démarche est génératrice de coûts importants :
- des coûts de conception et de développement, et
- des coûts de production dus aux caractéristiques particulières des pièces conçues et éventuellement à leur complexité d'assemblage.

Le document EP 1 197 387 décrit un projecteur multifonctions pour véhicule automobile. Ce projecteur comprend un cache rotatif monté sur un axe et pouvant prendre plusieurs positions prédéfinies. Ainsi, selon la position angulaire de ce cache, le faisceau lumineux émis présente des caractéristiques différentes et le projecteur assure différentes fonctions d'éclairage. Le cache est entraîné en rotation par un moteur, notamment un moteur piézo-électrique.

Les documents FR 2 790 062 et US 2003/31 026 décrivent des projecteurs double fonction pour véhicule automobile. Ces projecteurs comprennent des moyens pour déplacer la source lumineuse par rapport à un réflecteur et ainsi générer des faisceaux lumineux différents. Dans le document US 2003/31 026, les moyens de déplacement de la source lumineuse sont du type piézo-électrique.

Le document US 2009/15388 décrit un dispositif d'éclairage de véhicule automobile comprenant le système de détection d'obstacles. Le système de détection d'obstacles utilise des rayons infrarouges et les rayons de lumière visible orientée grâce à des miroirs déplacés grâce à des moteurs piézo-électriques.

Le document EP 2 066 530 décrit un dispositif de projecteur pour véhicule automobile. Il comprend un cache pouvant être déplacé grâce à un actionneur, notamment un actionneur de type piézo-électrique. Le cache permet de corriger les caractéristiques du faisceau lumineux de sorte qu'elles ne soient pas modifiées lors de changements d'assiette du véhicule automobile.

Tous les dispositifs évoqués précédemment permettent d'effectuer des corrections importantes sur les caractéristiques du faisceau lumineux émis. En revanche, ils ne permettent pas de s'affranchir des effets de la dilatation mentionnés plus haut et provoquant des déformations moins importantes des caractéristiques du faisceau lumineux émis.

Le document FR 2 313 233 présente un tel dispositif.

Contrairement aux documents cités précédemment, le but de l'invention est de fournir un dispositif de déplacement d'un élément permettant de remédier aux problèmes évoqués précédemment et améliorant les dispositifs de déplacement connus de l'art antérieur. En particulier, l'invention propose un dispositif de déplacement permettant de corriger des défauts d'un faisceau lumineux dus à des déformations thermiques des composants d'un dispositif d'éclairage et/ou de signalisation, ce moyen de compensation étant commandé électriquement.

Selon l'invention, le dispositif permet de déplacer un élément d'un dispositif d'éclairage et/ou de signalisation d'un véhicule automobile. Il comprend un moyen de compensation se dilatant de sorte qu'il compense des effets thermiques affectant la géométrie d'un faisceau lumineux émis par le dispositif d'éclairage et/ou de signalisation.

Un déplacement de dilatation du moyen de compensation peut être directement appliqué en un point de l'élément. Ainsi, le dispositif de déplacement à une structure mécanique très simple.

Le moyen de compensation peut être en liaison mécanique avec l'élément et positionné à distance d'un axe autour duquel l'élément est articulé de sorte qu'un effort de dilatation du moyen de compensation crée un couple autour de l'axe.

Un déplacement de dilatation du moyen de compensation peut être appliqué à l'élément via un dispositif d'amplification de déplacement. Ainsi, il est possible d'utiliser un moyen de compensation compact et/ou ne présentant pas un coefficient de dilatation extrêmement important.

Le moyen de compensation peut être articulé autour d'un point fixe et articulé sur une biellette contrainte de se déplacer selon une première direction et en liaison mécanique avec l'élément. La direction de dilatation du moyen de compensation et la première direction formant un angle, de préférence un angle supérieur à 70°. Cette première forme de réalisation présente une structure mécanique intéressante.

Le moyen de compensation et l'élément peuvent être articulés à un levier, lui-même articulé autour d'un axe fixe. Cette deuxième forme de réalisation présente également une structure mécanique intéressante.

Le moyen de compensation étant commandé électriquement, il est possible de contrôler finement l'état du moyen de compensation.

Dans un mode de réalisation préférée, le moyen de compensation est une cale piézo-électrique. Une telle cale présente l'avantage de se dilater en développant des efforts importants.

Selon l'invention, le procédé permet de commander électriquement un dispositif défini précédemment. Il est **caractérisé en ce qu**'on alimente électriquement le moyen de compensation pendant l'allumage du dispositif d'éclairage et/ou de signalisation.

On peut arrêter d'alimenter électriquement le moyen de compensation lorsque le dispositif d'éclairage et/ou de signalisation est éteint. En effet, il n'est pas nécessaire d'alimenter ce moyen lorsque la source lumineuse est éteinte.

On peut commencer à alimenter électriquement le moyen de compensation après l'échéance d'une temporisation déclenchée par l'allumage du dispositif d'éclairage et/ou de signalisation. Cette forme d'exécution est particulièrement aisée à mettre en oeuvre.

On peut alimenter électriquement le moyen de compensation avec un signal de tension évoluant d'abord selon une rampe, puis avec un signal de tension au moins sensiblement stabilisée à une valeur donnée. Cette forme d'exécution relativement simple permet de minimiser les variations de coupures pendant toute la phase de fonctionnement du dispositif d'éclairage et/ou de signalisation.

On peut encore alimenter électriquement le moyen de compensation en fonction d'une température du dispositif d'éclairage et/ou de signalisation. Cette forme d'exécution plus d'évoluée permet de minimiser, voire de supprimer, la variation de la position de la coupure pendant la phase de fonctionnement du dispositif d'éclairage et/ou de signalisation.

De préférence, le dispositif de déplacement comprend des moyens matériels et/ou logiciels de mise en oeuvre du procédé de commande défini précédemment.

Selon l'invention, le dispositif d'éclairage et/ou de signalisation d'un véhicule automobile est **caractérisé en ce qu**'il comprend un dispositif de déplacement défini précédemment.

Selon l'invention, le véhicule automobile est **caractérisé en ce qu**'il comprend un dispositif d'éclairage et/ou de signalisation défini précédemment.

Le dessin annexé représente, à titre d'exemples, différents modes de réalisation d'un dispositif d'éclairage et/ou de signalisation pour véhicule automobile selon l'invention.
La figure 1 est un schéma de principe en coupe d'un premier mode de réalisation d'un dispositif d'éclairage et/ou de signalisation selon l'invention.
La figure 2 est un schéma de principe en coupe d'un deuxième mode de réalisation d'un dispositif d'éclairage et/ou de signalisation selon l'invention.
La figure 3 est un schéma de principe en coupe d'un troisième mode de réalisation d'un dispositif d'éclairage et/ou de signalisation selon l'invention.
La figure 4 est un diagramme représentant l'évolution temporelle d'un premier signal de tension d'alimentation d'un moyen de compensation utilisé dans un dispositif de déplacement selon l'invention.
La figure 5 est un diagramme représentant l'évolution temporelle d'un deuxième signal de tension d'alimentation d'un moyen de compensation utilisé dans un dispositif de déplacement selon l'invention.
La figure 6 est un diagramme représentant l'évolution temporelle d'un troisième signal de tension d'alimentation d'un moyen de compensation utilisé dans un dispositif de déplacement selon l'invention.
La figure 7 est un diagramme représentant un déplacement d'un élément grâce à un moyen de compensation, en fonction des caractéristiques géométriques d'un moyen d'amplification de déplacement.
La figure 8 est un diagramme d'une section d'un faisceau lumineux généré par un feu de croisement, la section étant obtenue par exemple lors d'un essai normalisé sur un écran situé à 25 m en avant du feu de croisement.

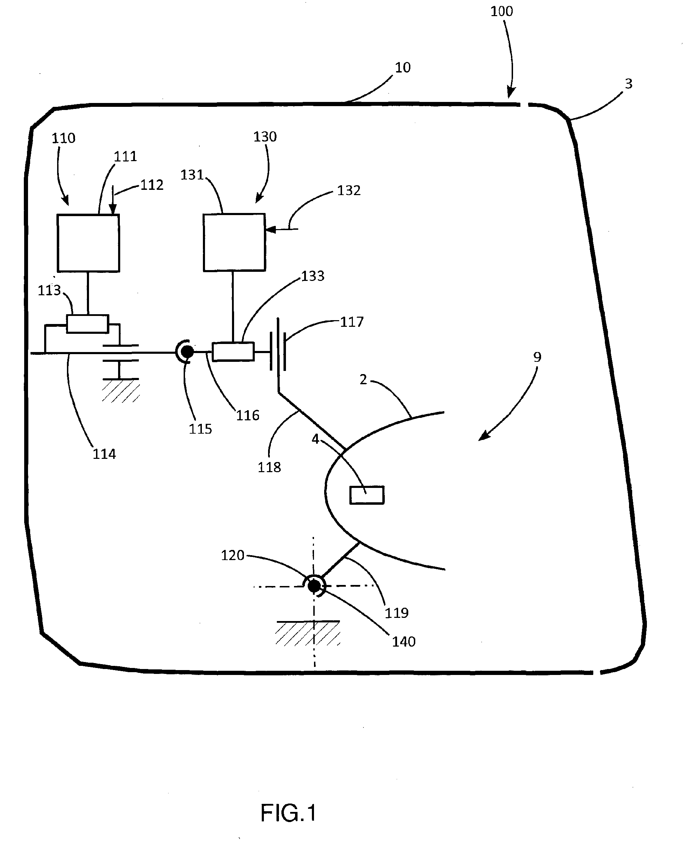

Un premier mode de réalisation d'un dispositif 100 d'éclairage et/ou de signalisation d'un véhicule automobile, représenté schématiquement en section à la figure 1, comprend principalement un module optique 9, un dispositif 130 de déplacement d'un élément du dispositif d'éclairage et/ou de signalisation, notamment un élément du module optique. Le dispositif 100 d'éclairage et/ou de signalisation d'un véhicule automobile comprend un boîtier 10 fermé par une glace de fermeture 3 et formant une enceinte, enfermant le module optique et le dispositif de déplacement. Le dispositif d'éclairage et/ou de signalisation comprend également un dispositif de correction d'assiette 110.

Le module optique comprend une source lumineuse 4 comme notamment une ampoule électrique, une lampe halogène ou une ou plusieurs diodes électroluminescentes. Il comprend également un réflecteur 2, par exemple un réflecteur formé par une surface complexe ou par une surface au moins sensiblement elliptique. Par exemple, le réflecteur peut être à surface elliptique avec une source lumineuse au niveau d'un premier foyer de la surface elliptique et une lentille convergente ou un système convergent de lentilles dont un foyer est positionné au niveau d'un deuxième foyer de la surface elliptique.

La demande de brevet EP 373 065 décrit des exemples de surfaces complexes. On peut notamment dire qu'une surface complexe est une surface capable de former un faisceau lumineux par exemple de type code, sans utiliser de coupelle occultant une partie de la surface et sans utiliser de glace striée. Plus précisément, une surface complexe peut être formée d'un assemblage de secteurs élémentaires, chaque secteur se raccordant au secteur immédiatement voisin le long de lignes globalement verticales. Chaque secteur est avantageusement généré par une génératrice horizontale d'où part un ensemble de courbes verticales vers le haut puis vers le bas. La génératrice horizontale est par exemple convexe et son profil détermine la répartition horizontale du faisceau généré par le secteur. Les génératrices des secteurs sont choisies pour que les rayons issus de la source soient réfléchis par la surface en étant orienté vers le bas afin de former la coupure, par exemple la coupure du code. Les courbes verticales sont par exemple des arcs de parabole. Les foyers de chaque parabole vers le haut sont en général distincts des foyers des paraboles partant vers le bas. Dans certains cas, les arcs peuvent différer d'une parabole et peuvent être des courbes coplanaires pouvant se définir par un ensemble de foyers (à chaque hauteur, on associe un foyer différent).

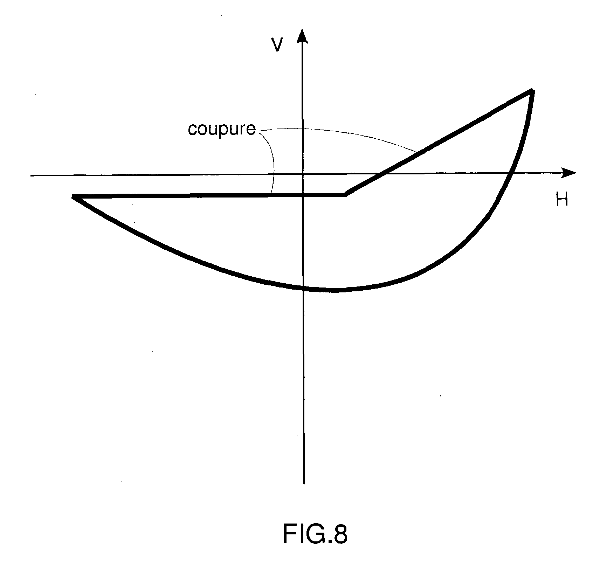

Le dispositif de correction d'assiette 110 du module optique 9 comprend un actionneur 113 commandé par un moyen de commande 111 recevant des informations 112, notamment des informations relatives à l'assiette du véhicule. L'actionneur 113 permet par exemple de déplacer un coulisseau 114 provoquant le déplacement d'une biellette 116 en liaison rotule avec le coulisseau et en liaison glissière 117 avec un bras 118 solidaire du module optique. Le module optique est par ailleurs solidaire d'un autre bras 119 articulé autour d'un axe 140 passant par une liaison rotule 120. Ainsi, le déplacement du coulisseau provoque une rotation du module optique 9 autour de l'axe 140 et les effets de variations d'assiette du véhicule sur le faisceau lumineux émis par le dispositif d'éclairage et/ou de signalisation peuvent être corrigés en activant l'actionneur 113. Les déplacements obtenus grâce au dispositif de correction d'assiette peuvent avoir une amplitude relativement élevée, néanmoins leur précision reste insuffisante pour s'affranchir de problèmes de géométrie du faisceau lumineux émis dus à des problèmes de déformations thermiques dans le dispositif d'éclairage et/ou de signalisation. En effet, durant un essai normalisé de certification d'un dispositif d'éclairage et/ou de signalisation, la coupure ne doit pas s'être déplacée de plus de 0,2 % entre deux instants de mesure. Durant un essai normalisé d'un feu de croisement, on obtient sur un écran situé à 25 m en avant du feu de croisement la figure de répartition de lumière représentée à la figure 8, la coupure étant constitué par les deux segments de droite supérieurs, l'un horizontal, l'autre incliné. Les 0,2 % correspondent à la tangente de l'angle de déviation du faisceau lumineux entre les deux instants, c'est-à-dire un angle de déviation d'environ 0,115°. Or, si on ne prend pas de précautions particulières dans la conception d'un dispositif d'éclairage et/ou de signalisation, il est courant qu'entre ces deux instants de mesure la coupure se déplace de 0,6 %. Ces 0,6 % correspondent à un angle de déviation d'environ 0,344°. Il doit donc être rattrapé un déplacement de 0,4 % et plus vraisemblablement un déplacement de 0,5 %. De tels déplacements sont obtenus avec un déplacement de la bielle 116 de 0,3 mm et 0,375 mm pour un bras de levier de 75 mm entre la bielle 116 et l'axe 140. Une telle précision de déplacement n'est pas atteinte avec les dispositifs de correction d'assiette connus. Ce problème ne peut pas non plus être résolu avec un dispositif de changement de fonction d'un dispositif d'éclairage et/ou de signalisation.

Dans ce premier mode de réalisation, le dispositif 130 de déplacement comprend un moyen de compensation 133 se dilatant de sorte qu'il compense des effets thermiques affectant la géométrie d'un faisceau lumineux émis par le module optique. En effet, des dilatations dans le boîtier 10 font varier les caractéristiques du faisceau lumineux en fonction de la température à l'intérieur du boîtier comme expliqué précédemment. Le dispositif de déplacement permet de contrer ces variations et, en particulier, permet d'éviter les variations de la coupure, notamment sa position par rapport à une position de référence déterminée. Par exemple, la position de référence peut être que la partie horizontale de la coupure code est à 0,57 degrés sous l'horizon..

Dans le premier mode de réalisation, le moyen de compensation 133 est disposé pour permettre de faire varier la longueur de la biellette 116. Cette longueur variant, le module optique 9 est orientée autour de l'axe 140. Cette orientation a pour effet de contrer les variations expliquées précédemment. De préférence, le dispositif de déplacement comprend un moyen de commande 131 recevant éventuellement des informations 132 et commandant électriquement le moyen de compensation 133.

Par exemple, le moyen de compensation peut être disposé dans le prolongement du coulisseau 114 de sorte que les dilatations du coulisseau et du moyen de compensation se font dans la même direction.

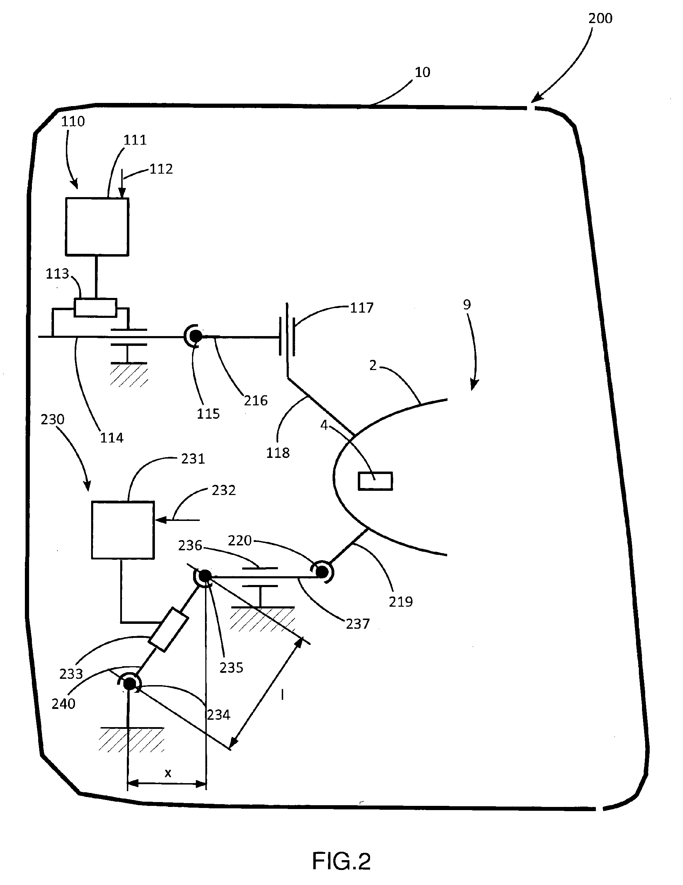

Un deuxième mode de réalisation du dispositif 200 d'éclairage et/ou de signalisation d'un véhicule automobile, représenté schématiquement en section à la figure 2, comprend un deuxième mode de réalisation d'un dispositif 230 de déplacement. Les composants présentant les mêmes références que dans le premier mode de réalisation sont identiques à ceux décrits précédemment en référence au premier mode de réalisation.

Dans ce deuxième mode de réalisation, la biellette 116 est remplacée par une biellette 216 dont la longueur est fixe. Dans ce deuxième mode de réalisation, le dispositif 230 de déplacement comprend un moyen de compensation 233 se dilatant de sorte qu'il compense, comme dans le premier mode de réalisation, des effets thermiques affectant la géométrie d'un faisceau lumineux émis par le module optique.

Le moyen de compensation 233 permet de faire varier la longueur de la biellette 240 articulée autour d'un point fixe grâce à une liaison rotule 234 et articulés à une deuxième biellette 237 grâce à une liaison rotule 235, la deuxième biellette étant contrainte de se déplacer selon une première direction donnée et en liaison mécanique de type rotule 220 avec un bras 219 solidaire du module optique. Ainsi, la longueur I de la biellette 240 augmentant, celle-ci s'incline et déplace la deuxième biellette 237. Le déplacement de cette deuxième biellette provoque un mouvement de rotation du module optique 9 autour d'un axe passant par la liaison rotule 115.

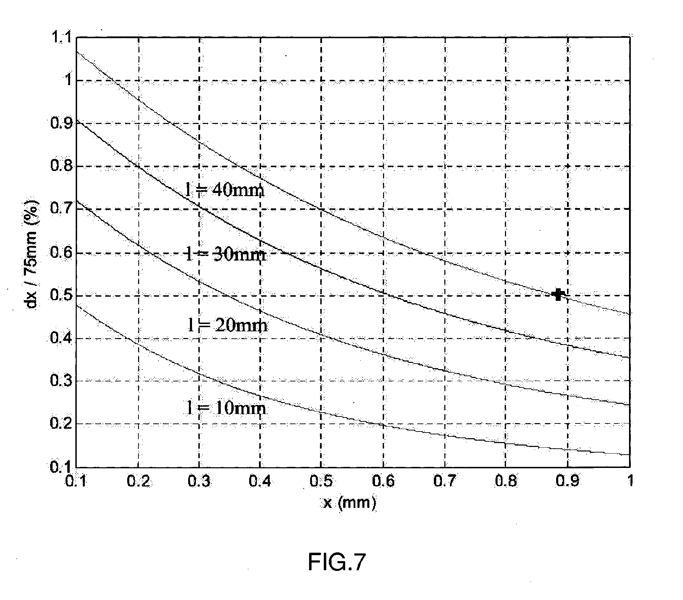

En notant x, la distance séparant les deux liaisons rotule 234 et 235 mesurée selon la première direction et en supposant que la distance, mesurée perpendiculairement à la première direction, entre les rotules 115 et 220 est égale à 75 mm et que la cale piézo-électrique s'allonge de dl=10µm, on peut lire, sur le graphique de la figure 7, en ordonnées, les déplacements de la coupure (en %) pour différentes longueurs de la biellette 240.

De préférence, le dispositif de déplacement comprend un moyen de commande 231 recevant éventuellement des informations 232 et commandant électriquement le moyen de compensation 233.

Le moyen de compensation 233 et l'actionneur 113 peuvent être disposés de part et d'autre du module optique 9, par exemple et tel qu'illustré en figure 2, l'actionneur 113 est relié à la partie haute du réflecteur 2 et actionne donc le haut du module 9, et le moyen de compensation est relié à la partie basse du réflecteur 2 et applique donc le déplacement de compensation sur le bas du module 9.

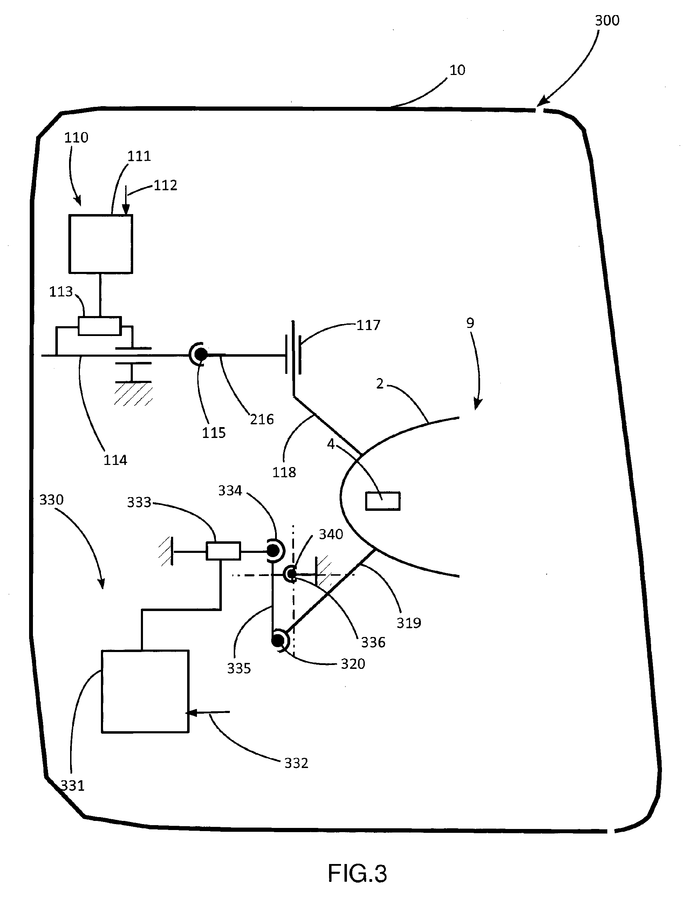

Un troisième mode de réalisation du dispositif 300 d'éclairage et/ou de signalisation d'un véhicule automobile, représenté schématiquement en section à la figure 3, comprend un troisième mode de réalisation d'un dispositif 330 de déplacement. Les composants présentant les mêmes références que dans le deuxième mode de réalisation sont identiques à ceux décrits précédemment en référence au deuxième mode de réalisation.

Dans ce troisième mode de réalisation, le dispositif 330 de déplacement comprend un moyen de compensation 333 se dilatant de sorte qu'il compense, comme dans les premier et deuxième modes de réalisation, des effets thermiques affectant la géométrie d'un faisceau lumineux émis par le module optique.

Dans le troisième mode de réalisation, le moyen de compensation 333 permet de déplacer un levier 335 en rotation, le levier 335 étant articulé autour d'un axe fixe 336. Le moyen de compensation est articulé sur le levier 335 et un bras 319 solidaire du module optique 9 est également articulé sur le levier 335. Des bras de levier sont définis comme les distances entre :
l'articulation du moyen de compensation sur le levier et l'articulation du levier autour de l'axe fixe, et
l'articulation du bras 319 sur le levier et l'articulation du levier autour de l'axe fixe.

En fonction du rapport entre ses bras de levier, on peut réaliser une amplification du déplacement provoqué par la dilatation du moyen de compensation. Ainsi, un déplacement donné du point d'articulation entre le moyen de compensation et le levier peut être transformé en un déplacement beaucoup plus important de l'extrémité du bras 319.

De préférence, le dispositif de déplacement 330 comprend un moyen de commande 331 recevant éventuellement des informations 332 et commandant électriquement le moyen de compensation 333.

Dans les trois modes de réalisation de dispositif de déplacement décrits précédemment, le moyen de compensation peut comprendre ou consister en une ou plusieurs cales piézo-électriques.

Le moyen de compensation peut aussi consister en un ensemble comprenant une ou plusieurs cales piézo-électriques et des moyens, notamment des moyens mécaniques, d'amplification de la dilatation des cales piézo-électriques. Dans les deuxième et troisième modes de réalisation, des moyens d'amplification du déplacement ont été prévus hors du moyen de compensation.

Dans les cas où le moyen de compensation comprend une cale piézo-électrique, les moyens de commande 131, 231, 331 comprennent de préférence un calculateur pilotant un générateur de tension destiné à produire la tension électrique d'alimentation du moyen de compensation. Le générateur de tension est du type haute tension.

Dans tout ce document, par « cale piézo-électrique », on entend tout dispositif piézo-électrique dont une dimension est fonction (notamment une fonction bijective ou sensiblement bijective) de la tension électrique avec laquelle on alimente ce dispositif. Cette définition exclut un moteur piézo-électrique dans lequel la position relative de deux pièces est fonction de la durée d'alimentation du moteur avec un signal de tension donné. A noter que dans un moteur piézo-électrique, la position relative de deux pièces est également souvent fonction des coefficients de frottement du système mécanique entraîné, ce qui impose l'ajout de capteurs de recopie pour être sûr de la position atteinte.

L'invention porte également sur un véhicule automobile comprenant un dispositif d'éclairage et/ou de signalisation selon l'invention.

L'invention porte encore sur un procédé de commande ou de fonctionnement d'un dispositif de déplacement objet l'invention et comprenant un moyen de compensation électriquement commandé.

Dans un tel procédé, on alimente électriquement le moyen de compensation pendant l'allumage ou l'activation du dispositif d'éclairage et/ou de signalisation, c'est-à-dire pendant que la source lumineuse émet de la lumière. De préférence, on arrête d'alimenter électriquement le moyen de compensation lorsque le dispositif d'éclairage et/ou de signalisation est éteint ou désactivé, c'est-à-dire pendant que la source lumineuse n'émet pas de lumière.

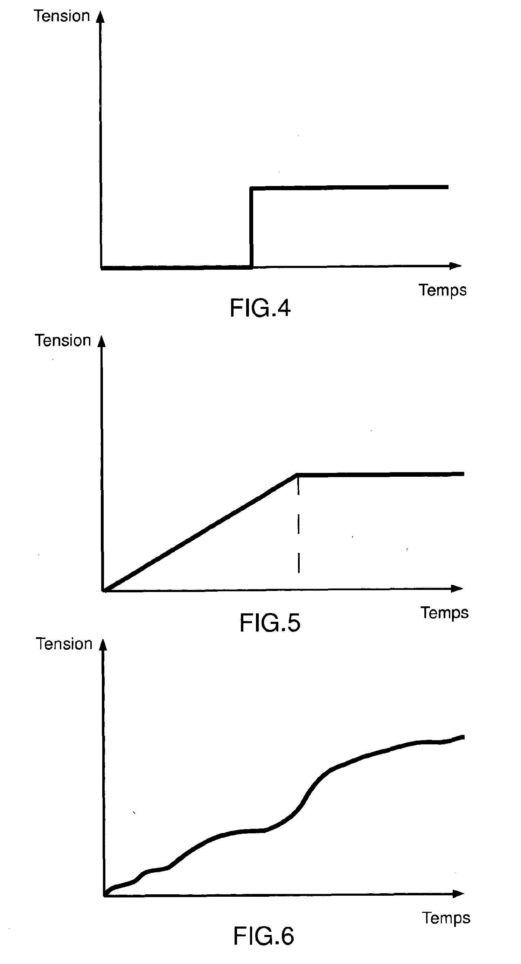

Dans un premier mode d'exécution, comme représenté à la figure 4, on commence à alimenter électriquement le moyen de compensation après l'échéance d'une temporisation déclenchée par l'allumage du dispositif d'éclairage et/ou de signalisation. Par exemple, la durée de cette temporisation est comprise entre 20 minutes et 60 minutes et vaut de préférence environ 40 minutes. Après l'échéance de cette temporisation, on alimente le moyen de compensation avec un signal de tension électrique ayant une première valeur. Cette première valeur de tension électrique demeure ensuite constante ou sensiblement constante au moins jusqu'à l'extinction de la source de lumière.

Dans un deuxième mode d'exécution, comme représenté à la figure 5, on commence à alimenter électriquement le moyen de compensation avec un signal de tension électrique évoluant selon une rampe, puis, lorsque la rampe atteint la première valeur de tension électrique, on continue à alimenter le moyen de compensation avec un signal de tension électrique ayant la première valeur demeurant ensuite constante ou sensiblement constante au moins jusqu'à l'extinction de la source de lumière. La rampe peut être une fonction linéaire du temps ou toute autre fonction, de préférence, toute autre fonction monotone. La pente moyenne de la rampe peut permettre d'atteindre la première valeur en plus de 10 minutes et en moins de 60 minutes, de préférence en environ 40 minutes.

Dans un troisième mode d'exécution, comme représenté à la figure 6, on alimente électriquement le moyen de compensation en fonction d'une température du dispositif d'éclairage et/ou de signalisation. Cette température peut être une température de l'air ambiant dans le dispositif d'éclairage et/ou de signalisation ou une température d'un élément du dispositif d'éclairage et/ou de signalisation. Cette information de température attaque par exemple les dispositifs de commande 131, 231, 331 décrits précédemment au niveau d'une entrée 132, 232, 332.

Dans les différents modes d'exécution, il est nécessaire de savoir quand la source lumineuse est alimentée. Cette information d'alimentation est par exemple fournie aux dispositifs de commande 131, 231, 331 décrits précédemment au niveau de l'entrée 132, 232, 332.

La première valeur de tension évoquée dans les premier et deuxième modes d'exécution du procédé est prédéterminée. Elle peut l'être empiriquement. En effet, après avoir conçu et réalisé le dispositif d'éclairage et/ou de signalisation, on peut faire un test de fonctionnement dans lequel on mesure la variation de coupure produite entre le début d'allumage du dispositif d'éclairage et/ou de signalisation et son fonctionnement en régime thermique permanent et on ne peut dans ce fonctionnement en régime thermique permanent appliquer une tension électrique d'alimentation du moyen de compensation en la faisant varier jusqu'à cette première valeur de tension avec laquelle la coupure revient dans sa position initiale de début d'allumage du dispositif d'éclairage et/ou de signalisation. Cette première valeur de tension peut être stockée dans les mémoires des calculateurs des moyens de commande des différents dispositifs d'éclairage et/ou de signalisation de même type qui sont produits.

De même, dans le troisième mode d'exécution du procédé, la relation entre la température et la tension électrique d'alimentation du moyen de compensation est prédéterminée. Elle peut l'être empiriquement selon une procédure semblable à celle décrite précédemment, c'est-à-dire en faisant un essai de fonctionnement au cours duquel on relève des températures de fonctionnement et on essaie des tensions électriques d'alimentation du moyen de compensation jusqu'à trouver celle qui permette de corriger la position de la coupure.

Il est également envisageable d'alimenter le moyen de compensation d'un signal électrique de tension variable pour compenser les effets de vibrations du véhicule sur la coupure, notamment un régime de ralenti du moteur. Ainsi, on alimente le moyen de compensations avec un signal de tension variable de façon à ce que la coupure ne se déplace pas même sous les effets de vibrations du véhicule automobile. Dans ce cas, on alimente le moyen de compensation avec un signal de tension alternatif ayant la même fréquence que la fréquence de vibration du véhicule.

Dans les différents modes de réalisation des dispositifs de déplacement décrits précédemment, le dispositif de déplacement permet le déplacement du module optique 9 dans le boîtier 10. Néanmoins, le dispositif de déplacement peut, pour atteindre le même but, déplacer tout élément du dispositif d'éclairage et/ou de signalisation et, notamment, tout élément du module optique. Notamment, il peut permettre le déplacement de la seule source lumineuse, le déplacement d'un cache, le déplacement d'un réflecteur, le déplacement d'une lentille ou d'un système de lentilles. De même, l'élément déplacé peut comprendre plusieurs composants du dispositif d'éclairage et/ou de signalisation ou du module optique comme par exemple une source lumineuse et un réflecteur, une source lumineuse et un cache, une source lumineuse et une lentille, un réflecteur et un cache, un réflecteur et une lentille ou un cache et une lentille...

Dans les différents modes de réalisation du dispositif de déplacement selon l'invention, l'amplitude de modification de la coupure est de préférence inférieure à 3°, c'est-à-dire qu'entre les deux états extrêmes de dilatation du moyen de compensation, la coupure varie d'au plus 3°. Encore préférentiellement l'amplitude de modification de la coupure est de préférence inférieure à 1°. C'est en effet un avantage de l'invention de pouvoir ajuster précisément des variations fines de la coupure.

## Revendications

1. Dispositif (130 ; 230 ; 330) de déplacement d'un élément (2, 3, 4) d'un dispositif d'éclairage et/ou de signalisation (100 ; 200 ; 300) d'un véhicule automobile, **caractérisé en ce qu'**il comprend un moyen de compensation (133 ; 233 ; 333) se dilatant de sorte qu'il compense des effets thermiques affectant la géométrie d'un faisceau lumineux émis par le dispositif d'éclairage et/ou de signalisation, ledit moyen de compensation (133 ; 233 ; 333) étant commandé électriquement.

2. Dispositif (130) selon la revendication précédente, **caractérisé en ce qu'**un déplacement de dilatation du moyen de compensation (133) est directement appliqué en un point de l'élément.

3. Dispositif (130) selon l'une des revendications précédentes, **caractérisé en ce que** le moyen de compensation (133) est en liaison mécanique avec l'élément et positionné à distance d'un axe (140) autour duquel l'élément est articulé de sorte qu'un effort de dilatation du moyen de compensation crée un couple autour de l'axe (140).

4. Dispositif (230 ; 330) selon la revendication 1, **caractérisé en ce qu'**un déplacement de dilatation du moyen de compensation (233 ; 333) est appliqué à l'élément via un dispositif (236, 237 ; 335) d'amplification de déplacement.

5. Dispositif selon la revendication précédente, **caractérisé en ce que** le moyen de compensation (233) est articulé autour d'un point fixe et articulé sur une biellette (237) contrainte de se déplacer selon une première direction et en liaison mécanique avec l'élément, la direction de dilatation du moyen de compensation et la première direction formant un angle, de préférence un angle supérieur à 70°.

6. Dispositif selon la revendication 4, **caractérisé en ce que** le moyen de compensation (333) et l'élément sont articulés à un levier (335), lui-même articulé autour d'un axe fixe (340).

7. Dispositif selon l'une des revendications précédentes, **caractérisé en ce que** l'élément du dispositif d'éclairage et/ou de signalisation est un module optique (9) ou un élément optique comprenant une source lumineuse (4) et/ou un élément (2) déviant des rayons lumineux.

8. Dispositif selon l'une des revendications précédentes, **caractérisé en ce que** le moyen de compensation est une cale piézo-électrique (133 ; 233 ; 333).

9. Procédé de commande d'un dispositif selon la revendication 8, **caractérisé en ce qu'**on alimente électriquement le moyen de compensation pendant l'allumage du dispositif d'éclairage et/ou de signalisation.

10. Procédé de commande selon la revendication précédente, **caractérisé en ce qu'**on arrête d'alimenter électriquement le moyen de compensation lorsque le dispositif d'éclairage et/ou de signalisation est éteint.

11. Procédé de commande selon la revendication 9 ou 10, **caractérisé en ce qu'**on commence à alimenter électriquement le moyen de compensation après l'échéance d'une temporisation déclenchée par l'allumage du dispositif d'éclairage et/ou de signalisation.

12. Procédé de commande selon la revendication 9 ou 10, **caractérisé en ce qu'**on alimente électriquement le moyen de compensation avec un signal de tension évoluant d'abord selon une rampe, puis avec un signal de tension au moins sensiblement stabilisée à une valeur donnée.

13. Procédé de commande selon la revendication 9 ou 10, **caractérisé en ce qu'**on alimente électriquement le moyen de compensation en fonction d'une température du dispositif d'éclairage et/ou de signalisation.

14. Dispositif selon l'une des revendications 1 à 8 **caractérisé en ce qu'**il comprend des moyens (131 ; 231 ; 331) matériels et/ou logiciels de mise en oeuvre du procédé de commande selon l'une des revendications 9 à 13.

15. Dispositif d'éclairage et/ou de signalisation (100 ; 200; 300) d'un véhicule automobile, **caractérisé en ce qu'**il comprend un dispositif de déplacement (130 ; 230 ; 330) d'un élément selon l'une des revendications 1 à 8 ou 14.

## Patentansprüche

1. Vorrichtung (130; 230; 330) zum Bewegen eines Elements (2, 3, 4) einer Beleuchtungs- und/oder Signalgebungsvorrichtung (100; 200; 300) eines Kraftfahrzeugs,
**dadurch gekennzeichnet, dass** sie ein Kompensationsmittel (133; 233; 333) umfasst, das sich so ausdehnt, dass Wärmeeffekte, die sich auf die Geometrie eines durch die Beleuchtungs- und/oder Signalgebungsvorrichtung abgegebenen Lichtbündels auswirken, kompensiert werden, wobei das Kompensationsmittel (133; 233; 333) elektrisch gesteuert wird.

2. Vorrichtung (130) nach dem vorhergehenden Anspruch,
**dadurch gekennzeichnet, dass** eine Dilatationsbewegung des Kompensationsmittels (133) unmittelbar auf eine Stelle des Elements wirkt.

3. Vorrichtung (130) nach einem der vorhergehenden Ansprüche,
**dadurch gekennzeichnet, dass** das Kompensationsmittel (133) mechanisch mit dem Element verbunden und mit Abstand zu einer Achse (140) positioniert ist, um die herum das Element solchermaßen schwenkbar gelagert ist, dass eine Dilatationskraft des Kompensationsmittels ein Drehmoment um die Achse (140) erzeugt.

4. Vorrichtung (230; 330) nach Anspruch 1,
**dadurch gekennzeichnet, dass** eine Dilatationsbewegung des Kompensationsmittels (233; 333) über eine Bewegungsverstärkungsvorrichtung (236, 237; 335) auf das Element wirkt.

5. Vorrichtung nach dem vorhergehenden Anspruch,
**dadurch gekennzeichnet, dass** das Kompensationsmittel (233) um einen festen Punkt herum schwenkbar gelagert und an einem Schwingarm (237) angelenkt ist, der gezwungen ist, sich in einer ersten Richtung und in mechanischer Verbindung mit dem Element zu verschieben, wobei die Dilatationsrichtung des Kompensationsmittels und die erste Richtung einen Winkel bilden, vorzugsweise einen Winkel von größer 70°.

6. Vorrichtung nach Anspruch 4,
**dadurch gekennzeichnet, dass** das Kompensationsmittel (333) und das Element mit einem Hebel (335) gelenkig verbunden sind, der seinerseits um eine feste Achse (340) schwenkbar gelagert ist.

7. Vorrichtung nach einem der vorhergehenden Ansprüche,
**dadurch gekennzeichnet, dass** das Element der Beleuchtungs- und/oder Signalgebungsvorrichtung ein optisches Modul (9) oder ein optisches Element mit einer Lichtquelle (4) und/oder ein die Lichtstrahlen ablenkendes Element (2) ist.

8. Vorrichtung nach einem der vorhergehenden Ansprüche,
**dadurch gekennzeichnet, dass** das Kompensationsmittel ein piezoelektrisches Distanzstück (133, 233; 333) ist.

9. Verfahren zum Steuern einer Vorrichtung nach Anspruch 8,
**dadurch gekennzeichnet, dass** das Kompensationsmittel beim Einschalten der Beleuchtungs- und/oder Signalgebungsvorrichtung elektrisch gespeist wird.

10. Steuerungsverfahren nach dem vorhergehende Anspruch,
**dadurch gekennzeichnet, dass** das Kompensationsmittel nicht mehr elektrisch gespeist wird, wenn die Beleuchtungs- und/oder Signalgebungsvorrichtung ausgeschaltet ist.

11. Steuerungsverfahren nach Anspruch 9 oder 10,
**dadurch gekennzeichnet, dass** das Kompensationsmittel erst nach Ablauf einer Zeitverzögerung, die durch das Einschalten der Beleuchtungs- und/oder Signalgebungsvorrichtung ausgelöst wird, elektrisch gespeist wird.

12. Steuerungsverfahren nach Anspruch 9 oder 10,
**dadurch gekennzeichnet, dass** das Kompensationsmittel mit einem Spannungssignal elektrisch gespeist wird, das sich zunächst ansteigend verändert, dann mit einem Spannungssignal, das sich wenigstens im Wesentlichen bei einem gegebenen Wert stabilisiert hat.

13. Steuerungsverfahren nach Anspruch 9 oder 10,
**dadurch gekennzeichnet, dass** das Kompensationsmittel in Abhängigkeit einer Temperatur der Beleuchtungs- und/oder Signalgebungsvorrichtung elektrisch gespeist wird.

14. Vorrichtung nach einem der Ansprüche 1 bis 8,
**dadurch gekennzeichnet, dass** sie Hard- und/oder Softwaremittel (131; 231; 331) zur Durchführung des Steuerungsverfahrens gemäß einem der Ansprüche 9 bis 13 umfasst.

15. Beleuchtungs- und/oder Signalgebungsvorrichtung (100; 200; 300) eines Kraftfahrzeugs,
**dadurch gekennzeichnet, dass** sie eine Vorrichtung (130; 230; 330) zum Bewegen eines Elements gemäß einem der Ansprüche 1 bis 8 oder 14 umfasst.

## Claims

1. Device (130; 230; 330) for moving an element (2, 3, 4) of a lighting and/or signalling device (100; 200; 300) of an automobile, **characterised in that** it comprises a compensating means (133; 233; 333) designed to expand so that it compensates thermal effects affecting the geometry of a light beam emitted by the lighting and/or signalling device, the said compensating means (133; 233; 333) being electrically controlled.

2. Device (130) according to the preceding claim, **characterised in that** an expansion movement of the compensating means (133) is directly applied at a point of the element.

3. Device (130) according to any one of the preceding claims, **characterised in that** the compensating means (133) is mechanically linked with the element and positioned at a distance from an axis (140) about which the element is articulated so that an expansion force of the compensating means creates a torque about the axis (140).

4. Device (230; 330) according to claim 1, **characterised in that** an expansion movement of the compensating means (233; 333) is applied to the element via a movement amplifying device (236, 237; 335).

5. Device according to the preceding claim, **characterised in that** the compensating means (233) is articulated about a fixed point and articulated on a connecting rod (237) constrained to move in a first direction and mechanically linked with the element, the direction of expansion of the compensating means and the first direction forming an angle, preferably an angle greater than 70°.

6. Device according to claim 4, **characterised in that** the compensating means (333) and the element are articulated to a lever (335), itself articulated about a fixed axis (340).

7. Device according to any one of the preceding claims, **characterised in that** the element of the lighting and/or signalling device is an optical module (9) or an optical element comprising a light source (4) and/or an element (2) for deviating light beams.

8. Device according to any one of the preceding claims, **characterised in that** the compensating means is a piezoelectric spacer (133; 233; 333).

9. Method for controlling a device according to claim 8, **characterised in that** the compensating means is powered electrically while the lighting and/or signalling device is illuminated.

10. Control method according to the preceding claim, **characterised in that** the electrical powering of the compensating means is stopped when the lighting and/or signalling device is extinguished.

11. Control method according to claim 9 or 10, **characterised in that** electrical powering of the compensating means is started after a time delay activated by illumination of the lighting and/or signalling device has elapsed.

12. Control method according to claim 9 or 10, **characterised in that** the compensating means is powered electrically with a voltage signal varying initially in a ramp-like manner, then with a voltage signal at least substantially stabilised at a given value.

13. Control method according to claim 9 or 10, **characterised in that** the compensating means is powered electrically in relation to a temperature of the lighting and/or signalling device.

14. Device according to any one of claims 1 to 8, **characterised in that** it comprises hardware and/or software means (131; 231; 331) for putting into effect the control method according to any one of claims 9 to 13.

15. Lighting and/or signalling device (100; 200; 300) of an automobile, **characterised in that** it includes a device (130; 230; 330) for moving an element according to any one of claims 1 to 8 or 14.
